# EUROPEAN PATENT SPECIFICATION

(11) **EP 1 721 932 B1**
(45) Date of publication and mention of the grant of the patent: **13.08.2008**
(21) Application number: 06113603.2
(22) Date of filing: 08.05.2006
(51) Int. Cl.: C08L 23/22, C08L 21/00, C08K 3/34, B29C 73/16, B29C 73/22, B60C 19/12, C08K 3/04, C08K 9/04, C08K 9/06

(54) **Pneumatic tire with built-in sealant containing pre-hydrophobated silica**
Luftreifen mit eingebauter Dichtungsschicht enthaltend prähydrophobiertes Kieselgel
pneumatique contenant une couche étanche contenant de silice pré-hydrophobée

(30) Priority: 11.05.2005 US 126506
(43) Date of publication of application: 15.11.2006
(73) Proprietor: THE GOODYEAR TIRE & RUBBER COMPANY, Akron, OH 44316-0001 (US)
(72) Inventor: Sandstrom, Paul Harry, Cuyahoga Falls, OH 44223 (US)
(74) Representative: Kutsch, Bernd

(56) References cited:
- EP-A- 1 228 901
- EP-A- 1 400 559
- EP-A- 1 457 308
- EP-A- 1 459 907
- EP-A- 1 533 108
- US-A1- 2003 230 376

## Description

### Field of the Invention

The present invention relates to a pneumatic tire with a built-in depolymerized butyl rubber based sealant layer. In one aspect, the built-in sealant layer is of a composition comprised of a partially depolymerized butyl rubber or alternatively comprised of a polymer composite of partially depolymerized butyl rubber, together with partially depolymerized cis 1,4-polyisoprene rubber and/or partially depolymerized liquid polyisoprene polymer, which contains a pre-hydrophobated silica. The sealant layer may also contain a colorant of a non-black color which produces a built-in sealant layer of a color which contrasts with black. Thus the sealant layer may be black in color or may be a color which contrasts with a black color. The butyl rubber-based sealant precursor is built into the tire as a layer to form a tire assembly including such sealant precursor layer wherein the butyl rubber or butyl rubber-based composite portion of the sealant precursor layer is at least partially depolymerized during a subsequent curing of the tire at an elevated temperature in a suitable mold to form the tire having the resultant built-in sealant layer. The sealant precursor composition may additionally contain conventional clay, exfoliated intercalated clay platelets, calcium carbonate and/or corn cob granule fillers.

### Background of the Invention

Various pneumatic tires have been proposed which contain a built-in sealant layer based upon a depolymerized butyl rubber layer.

For example, in US-B- 4,895,610 it is proposed to build a layer of butyl rubber-based composition into a tire which contains a polyisobutylene polymer and an organoperoxide, following which under a condition of elevated temperature used to cure the tire, a major portion of the butyl rubber is presented as being depolymerized to form a tacky material which has puncture sealant properties.

US-A- 2005/0034799 relates to a tire with built-in sealant comprised of a partially depolymerized butyl rubber via an organoperoxide which contains a dispersion of particulate pre-cured rubber particles.

Fillers such as exfoliated, intercalated water swellable clays, particularly exfoliated clay platelets, may be referred to herein as nanoclays derived from water swellable clays such as for example montmorillonite, hectorite and vermiculite clays or their mixtures. For example, see US-B- 6,598,645 and US-B- 6,858,665. Such exfoliated clays platelets are intended to be differentiated from conventional clays, such as for example kaolin clays which would not be expected to be in an exfoliated platelet form.

The various built-in sealant layers for the pneumatic tires which are derived from a depolymerization of a butyl rubber-based sealant precursor composition typically contain a rubber reinforcing carbon black filler and are therefore black in color.

For this invention, it is desired to provide a built-in sealant layer for a pneumatic tire which is derived from a depolymerization of a butyl rubber-based sealant precursor composition which is of a black color (resulting from an inclusion of carbon black) or a color other than black (resulting from an inclusion of a colorant with a minimal, if any carbon black content), where the sealant of other than black color may be used as an aid to identify a puncture wound in a carbon black reinforced innerliner, tread and/or sidewall of said tire, depending somewhat upon the position of the built-in sealant layer, because of its contrasting color. Therefore, in one aspect, it is envisioned that such a non-black colored sealant layer is substantially exclusive of carbon black and particularly substantially exclusive of a rubber reinforcing carbon black. By the term "substantially exclusive of" carbon black it is intended that only a low or minimal amount, preferably none, of carbon black is present such as, for example, an impurity amount (e.g. less than 0.1 phr) of carbon black, alternately an amount of up to 2, preferably less than 0.5, phr of carbon black, may be present so long as the sealant layer is of a color other than black and preferably contrasting with black colored (carbon black reinforcement containing) tire components which adjoin the built in sealant layer such as, for example, a tire innerliner component.

In practice, built-in sealants for tires based upon organoperoxide depolymerized butyl rubber have heretofore, in general, relied upon containing rubber reinforcing carbon black to provide a degree of reinforcement and thereby a suitable rubber viscosity to enable the sealant precursor composition to be conveniently processable both by formation into a suitable rubber sheet whether by extrusion or calendering and, also, by handling to build a sheet, or layer, of the sealant precursor composition into a tire assembly. Further, the presence of the rubber reinforcing carbon black is relied upon to provide a suitable viscosity of the built-in sealant in order to promote the stability of the sealant composition.

However, for this invention, synthetic, amorphous silica (aggregates of primary silica particles), preferably in the form of a precipitated silica, is used as a primary reinforcing filler for the butyl rubber-based sealant precursor composition instead of rubber reinforcing carbon black so that a colorant other than of a black color may be effectively used to color the sealant layer.

In another aspect of the invention, a portion of the precipitated silica may be replaced by fillers such as, for example, clay, for example kaolin clay, calcium carbonate the aforesaid corn cob granules and/or the aforesaid exfoliated, intercalated clays for which, therefore, the butyl rubber-based sealant precursor may contain one or more of such fillers in addition to the precipitated silica.

However, such fillers are not considered herein as being as effective reinforcing ingredients for the butyl rubber based rubber composition as the aforesaid precipitated silica which is in a form of said pre-hydrophobated silica. Accordingly, only a partial replacement of the pre-hydrophobated silica with such filler(s) is contemplated.

Significant challenges are presented in the use of the synthetic, amorphous silica, particularly precipitated silica, as well as the inclusion of the aforesaid additional fillers.

For example, contrary to rubber reinforcing carbon black, such precipitated silica, (e.g. precipitated silica aggregates of primary silica particles), normally contains a significant presence of water of hydration, and/or water of association on its surface as well as a significant presence of hydroxyl groups (e.g. silanol groups). The clay and calcium carbonate may also contain an associated water moiety.

While the mechanism may not be fully understood, it is envisioned that at least a portion of such water, and possibly a portion of such hydroxyl groups, is available to prematurely decompose the organoperoxide intended to be used to depolymerize the butyl rubber in the sealant precursor composition.

It is considered herein that such premature decomposition of the organoperoxide, whether by presence of the water of hydration and/or association or by the presence of the hydroxyl groups, may adversely affect the free radical generating activity of the organoperoxide for a timely depolymerization of the butyl rubber after the sealant precursor layer is built into the tire assembly and the tire is cured at an elevated temperature. Such prematurely formed free radicals may become associated with the silica, and possibly the clay and calcium carbonate, rather than be involved with the desired depolymerization of the butyl rubber. It is further envisioned that if excess organoperoxide is added to allow for such premature decomposition, a portion of such excess organoperoxide may later or otherwise gradually become available to interact with associated rubber layers of the tire assembly, or construction, adjacent to the built-in sealant.

For this invention, to inhibit, retard and/or significantly prevent significant contact of such water moieties and hydroxyl groups of the amorphous silica aggregates (precipitated silica) with the organoperoxide, the synthetic amorphous silica is pre-treated (pre-hydrophobated) prior to its addition to the butyl rubber based sealant composition.

An important aspect of this invention is providing a pneumatic tire with a built-in black or non-black sealant layer positioned (sandwiched) between dimensionally stable sulfur vulcanized rubber layers (e.g. between a tire inner liner rubber layer and tire carcass) which promotes sealing against an externally puncturing object to prevent, or significantly retard, leakage of gas (e.g. air) from the tire cavity through the puncture to the outside of the tire by allowing the pressure within the tire cavity (air pressure greater than ambient atmospheric pressure) to press the sealant against the puncturing object or the cavity caused by the puncturing object.

In the description of this invention, the term "phr" is used to designate parts by weight of an ingredient per 100 parts of elastomer unless otherwise indicated. The terms "elastomer" and "rubber" are used interchangeably unless otherwise indicated. The terms "cure" and "vulcanize" are used interchangeably unless otherwise indicated.

EP-A- 1 457 308 and US- A- 2003/0230376 each describe a pneumatic tire having a built-in sealant layer based on partially depolymerized butyl rubber.

EP-A 1 459 907, EP-A- 1 400 559 and EP-A- 1 228 901 describe a pneumatic tire wherein precipitated pre-hydrophobated silica is used.

EP-A- 1 533 108 describes a pneumatic tire with a built-in sealant layer comprising organoperoxide-depolymerized butyl rubber and precipitated silica.

### Summary and Practice of the Invention

In accordance with this invention, a pneumatic rubber tire having a built-in puncture sealing layer according to claim 1 is provided.

This particulate reinforcing filler preferably comprises:
(1) 25 to 100, alternately from 30 to 75 phr, of precipitated silica (such as synthetic amorphous silica), and from zero up to 5, preferably zero up to 0.2 phr, of carbon black, so long as said sealant layer is of a non-black color,
   wherein said carbon black is preferably a rubber reinforcing carbon black, or;
(2) 5 to 50 phr of precipitated silica and from 10 to 50 phr of carbon black so long as the sealant layer is of a black color, wherein said carbon black is preferably a rubber reinforcing carbon black;
(3) from zero to 20, alternately from 5 to15, phr of additional filler comprised of clay preferably kaolin clay, calcium carbonate, corn cob granules, or exfoliated intercalated water swellable clay platelets or their mixtures.

The rubber processing oil is preferably used in an amount of from zero to 20, alternately 2 to 15 phr. The rubber processing oil is preferably a rubber processing oil having a maximum aromatic content of 15 weight percent, and more preferably a naphthenic content in a range of from 35 to 45 weight percent and/or a paraffinic content in a range of 45 to 55 weight percent.

Preferably, for said second organoperoxide partially depolymerized composite, said pre-hydrophobated precipitated silica is pre-hydrophobated by treatment of precipitated silica prior to addition of said organoperoxide either in situ within the rubber composition or by pre-treatment of said silica prior to its addition to the rubber composition (butyl rubber in combination with said cis 1,4-polyisoprene rubber and/or liquid cis 1,4-polyisoprene rubber) to inhibit adsorption or absorption of said organoperoxide on the surface of said silica, for example by treatment of said silica with
(a) said non-silane containing compound,
(b) an alkoxysilane containing compound comprised of at least one of an organoalkoxysilane compound and organomercaptoalkoxysilane compound,
(c) a combination of at least one of said of said non-silane containing compounds and said alkoxysilane containing compounds, or
(d) a bis(3-trialkoxysilylalkyl) polysulfide having an average of from 2 to 4, alternately an average of from 2 to 2.6 or an average of from 3.4 to 3.8, connecting sulfur atoms in its polysulfidic bridge.

The cis 1,4-polyisoprene elastomer and liquid cis 1,4-polyisoprene polymer, as well as the butyl rubber, can undergo a chain scission in the presence of the organoperoxide, and therefore at least a partial depolymerization.

In practice, the composite of butyl rubber together with the cis 1,4-polyisoprene rubber and/or liquid cis 1,4-polyisoprene polymer are treated as a singular composition by the organoperoxide in a manner that the butyl rubber, cis 1,4-polyisoprene rubber and/or liquid cis 1,4-polyisoprene polymer are co-partially depolymerized together by the organoperoxide to form a partially depolymerized polymer composite.

A significant aspect of the inclusion of the organoperoxide partially depolymerized cis 1,4-polyisoprene elastomer as a component of the organoperoxide depolymerized butyl rubber based sealant network composite is to promote an improved interaction between the treated precipitated silica and the depolymerized polymer composite network based upon the relatively higher unsaturation of the polyisoprene polymer (significantly higher than the unsaturation content of the butyl rubber).

A significant aspect of the inclusion of the organoperoxide partially depolymerized liquid cis 1,4-polyisoprene polymer as a component of the butyl rubber based sealant network composite is to promote an improved ability to adjust, or manipulate, the sealant viscosity.

In practice, said sealant layer is positioned between a carbon black reinforced innerliner and tire carcass, or between two carbon black reinforced tire innerliners, and wherein said tire has a carbon black reinforced tread and sidewall.

A significant aspect of the invention is, for example, where the sealant is of a non-black color, is the use of such sealant as an aid to:
identify a puncture wound in a carbon black reinforced rubber innerliner, crown region, tread and/or sidewall of said tire, and/or
identify the presence of the built-in non-black colored sealant in the tire, such as for example, in a tire retreading operation to physically detect the presence of the built-in sealant by its visually contrasting non-black colored appearance in the case of an open wound in a carbon black reinforced rubber innerliner or by a relatively softness of the rubber innerliner layer itself as a result of the associated underlying built-in sealant layer.

Accordingly, in an additional accordance with this invention, the tire is provided as having said non-black colored built-in sealant layer having the capability of visibly identifying a puncture wound which extends through a black colored carbon black reinforced tire rubber innerliner layer, black colored carbon black reinforced tire rubber tread and/or black colored carbon black reinforced tire rubber sidewall layer to said built-in sealant layer by a physical flow of a portion of said non-black colored built-in sealant layer through said puncture wound to form a contrastingly non-black colored sealant on a visible surface of said black colored carbon black reinforced innerliner, tread or sidewall.

In practice, representative of said alkoxysilanes are, for example, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

In practice, various conventional clays may be used. Representative of such clays are, for example, kaolin clays. It is envisioned herein that a benefit of utilization of such conventional clay is to provide a modified, or tempered, degree of reinforcement, as compared to the silica, for the sealant precursor composition to aid in its aforesaid processing and also to aid, in combination with the silica, in providing a suitable stiffness and associated dimensional integrity for the partially depolymerized butyl rubber-based sealant composition.

In practice, exfoliated, intercalated water swellable clays can be used in which a significant portion of the clay is present in a form of exfoliated clay platelets. Representative of such clays are, for example, montmorillonite clays and hectorite clays as well as vermiculite for a purpose of also adding a degree of reinforcement.

In practice, the calcium carbonate may also be used. As with the aforesaid conventional clays and exfoliated clay platelets, it is envisioned that a benefit of utilization of such calcium carbonate is to provide a modified, or tempered, degree of reinforcement, as compared to the silica, for the sealant precursor composition to aid in its aforesaid processing and also to aid, in combination with the silica, in providing a suitable stiffness, and associated dimensional integrity for the partially depolymerized butyl rubber-based sealant composition.

For this invention, various synthetic amorphous silicas may be used in a form of a precipitated silica, which may be used to prepare the pre-hydrophobated silica representative of which are, for example and not intended herein to be limitative, HiSil 532™ from PPG Industries, Hubersil 4155™ from the J. M. Huber Company and Ultrasil™ VN2 and VN3 from the Degussa Company.

Such precipitated silicas are silica aggregates which are considered herein to be in an agglomerated (compacted) form with relatively very low BET (nitrogen) surfaces areas (e.g. reportedly 60 m²/g for the HiSil 532™ and Hubersil 4155™ silica aggregates, provided in an agglomerated form).

A method of measuring BET (nitrogen) surface area of precipitated silicas is ASTM D 1993-91, Standard Test Method for Precipitated Silica-Surface Area by Multipoint BET Nitrogen Adsorption which relates to the conventional theory described by Brunauer, Emmett and Teller in the Journal of the American Chemical Society, Volume 60, (1938), Page 309.

The optional various rubber processing oils are well known to those having skill in such art. For this invention, a rubber processing oil having a low aromaticity content is preferred, namely a rubber processing oil having an aromaticity content of less than about 15 weight percent. Such a preferred rubber processing oil may be composed of, for example, 35 to 45 weight percent naphthenic content, 45 to 55 weight percent paraffinic content and an aromatic content of less than 15 weight percent (e.g. from 10 to 14 weight percent). It is considered herein that a representative of such preferred rubber processing oil is Tufflo 100™ from the Barton Solvent Company. The rubber processing oil, in relatively low concentrations, is seen herein to aid in mixing the ingredients for the sealant precursor composition and to aid in promoting the aforesaid processing of sealant precursor composition.

The optional short fibers may be selected from, for example, cotton fibers and from synthetic fibers selected from rayon, aramid, nylon and polyester fibers, and their mixtures. In practice, such cotton short fibers may have an average length, for example, in a range of up to 200 microns (e.g. an average length of 150 microns) and the synthetic (e.g. the polyester and nylon fibers) may have an average length, for example, of up to a maximum of 2,500 microns. The short fibers are considered herein to aid in promoting the effectiveness of the sealing ability of the resultant sealant composition. In relatively low concentrations, such synthetic fibers are not seen herein as significantly interfering with the processing of the sealant precursor composition yet as promoting the effectiveness of the resultant built-in sealant layer for its puncture sealing ability.

In practice, the colorant may be comprised of titanium dioxide. For example, the colorant of such sealant composition may preferably be composed of titanium dioxide where a white colored sealant layer is desired. Also, such colorant may contain, or be comprised, of titanium dioxide as a color brightener together with at least one non-black organic pigment and/or non-black inorganic pigment or dye.

Various colorants may be used to provide a non-black color to the sealant and sealant precursor composition. Representative of such colorants are, for example, yellow colored colorants as Diarylide Yellow™ pigment from PolyOne Corporation and Akrosperse E-6837™ yellow EPMB pigment masterbatch with an EPR (ethylene/propylene rubber) from the Akrochem Company. As discussed above, such colorant may be used in combination with titanium dioxide with the titanium dioxide being somewhat of a brightener for the colorant.

Various organoperoxides may be used for the sealant precursor butyl rubber-based composition. Preferably organoperoxides are used which become active (e.g. generate peroxide free radicals) at high temperatures, that is, for example, above 100°C. Such organoperoxides are referred to therein as active peroxides. Examples of such organoperoxides which are considered herein as being active organoperoxides are, for example, tertbutyl perbenzoate and dialkyl peroxides with the same or different radicals, such as dialkylbenzene peroxides and alkyl pre-esters. Preferably the active organoperoxide will contain two peroxide groups. Frequently the peroxide groups are attached to a tertiary butyl group. The basic moiety on which the two peroxide groups are suspended can be aliphatic, cycloaliphatic, or aromatic radicals. Some representative examples of such active organoperoxides are, for example, n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane. The n-butyl 4,4-di-(tert-butylperoxy) valerate may be a preferred organoperoxide for use in the depolymerizing of the butyl rubber or composite of butyl rubber together with cis 1,4-polyisoprene rubber and/or liquid cis 1,4-polyisoprene polymer of the butyl rubber containing sealant precursor.

Such organoperoxide may be provided on a mineral carrier such as, for example calcium carbonate or a combination of calcium carbonate and calcium silicate. For example, the n-butyl 4,4-di-(tert-butylperoxy) valerate may be provided as a composite with a mineral carrier. Such mineral carrier may be, for example, combination of calcium carbonate and calcium silicate such as, for example, as Trigonox 17-40B-pd™ from the Akzo Nobel Polymer Chemicals LLC Company.

Thus, such active organoperoxides may be added to the sealant precursor butyl rubber-based composition layer usually as a composite with an inert, free-flowing mineral carrier, such as, for example, calcium carbonate. The organoperoxide as a composite thereof with a mineral carrier, such as for example calcium carbonate, is preferred for storing the peroxide and handling and processing. Such composite may be composed of, for example, from 35 to 60 weight percent of the active organoperoxide.

In practice, a pneumatic tire having a puncture sealing ability comprised of an assembly of components comprised of an outer circumferential (sulfur curable) rubber tread, (sulfur curable) rubber carcass supporting said tread and an inner layer, may be prepared by, for example:
positioning a layer of said uncured butyl rubber-based rubber composition, exclusive of sulfur curative, as a sealant layer precursor between said innerliner and rubber carcass barrier layer,
vulcanizing said tire assembly in a suitable mold at a temperature in a range of from 130°C to 175°C for a sufficient period of time to partially depolymerize said butyl rubber or said composite of butyl rubber together with at least one of cis 1,4-polyisoprene rubber and liquid cis 1,4-polyisoprene polymer and thereby form a built-in sealant layer.

In practice, it is conventionally preferred that the butyl rubber, or combination of butyl rubber and at least one of cis 1,4-polyisoprene rubber and liquid cis 1,4-polyisoprene polymer, and pre-hydrophobated silica are blended in at least one sequential preparatory, or non-productive, mixing stage in the absence of the organoperoxide followed by a final, or productive, mixing stage in which the organoperoxide (and possibly one or more of the additional ingredients) is added.

Conventionally, the non-productive mixing stage(s) may be conducted, for example, by mixing the ingredients to a temperature in a range of from 110°C to 150°C and the subsequent productive mixing stage may be conducted, for example, by mixing the ingredients to a temperature in a range of from 85°C to 100°C.

A significant aspect of this invention is the at least partial depolymerization of the butyl rubber-based sealant precursor layer built into the tire (between the tire innerliner and tire carcass) during the vulcanization of the tire itself in a suitable mold at an elevated temperature via an organoperoxide in the presence of the said pre-hydrophobated precipitated silica which may optionally include clay and/or calcium carbonate to create the built-in colored puncture sealant layer.

This is considered herein to be significant because said butyl rubber-based sealant precursor composition is conveniently processable as a rubber composition which can be suitably built as a rubber layer into a tire.

In practice, upon vulcanization of the tire assembly under conditions of elevated temperature, a major portion of the uncured butyl rubber composition is considered herein to be depolymerized in the presence of the organoperoxide compound to form a tacky material.

In practice, said tire innerliner halobutyl rubber-based layer is typically a sulfur curative-containing halobutyl rubber composition of a halobutyl rubber such as for example chlorobutyl rubber or bromobutyl rubber.

Such tire halobutyl rubber-based innerliner layer may also contain one or more sulfur curable diene-based elastomers such as, for example, cis 1,4-polyisoprene natural rubber, cis 1,4-polybutadiene rubber and styrene/butadiene rubber, and their mixtures, or more preferably a combination of one or more of said halobutyl rubbers and said diene based elastomers.

As the tire is vulcanized together with the butyl rubber-based rubber composition layer (the sealant layer precursor) sandwiched between the tire carcass and the tire's rubber innerliner, the butyl rubber of the butyl rubber-based composition layer which is to become the sealant layer, becomes partially depolymerized.

In effect, the butyl rubber or combination of butyl rubber together with the cis 1,4-polyisoprene rubber and/or cis 1,4-liquid polyisoprene polymer in the butyl rubber based composition sealant layer is transformed into a puncture sealant layer during the curing of the tire. This at least partial depolymerization of the butyl rubber-based composition layer is effected by the presence of the one or more free radical-generating organoperoxides contained in the butyl rubber sealant precursor composition.

The various components of the sealant layer can be mixed together using convenient rubber mixing equipment, particularly an internal rubber mixer. The rubber composition used in the sealant precursor layer typically has sufficient viscosity and unvulcanized tack to enable its incorporation into an unvulcanized tire without significantly departing from conventional tire building techniques.

In an exemplary method of this invention, the butyl rubber-based sealant precursor composition can be formed into a rubber strip by using conventional equipment such as a calender, extruder, or any combination thereof, and the rubber strip assembled into the tire. In building the tires of this invention a rubber innerliner of a butyl rubber based (e.g. bromobutyl rubber) rubber composition is first applied to a building drum and then the strip of butyl rubber based sealant precursor layer is applied to the layer of innerliner and thereafter the remainder of various carcass plies and layers of the tire assembly. The butyl rubber based sealant precursor layer is thereby assembled into the unvulcanized tire assembly of components between an innerliner layer and tire carcass.

The built-in sealant layer may, for example, be positioned between a tire innerliner rubber layer and tire carcass or between two tire innerliner rubber layers wherein said sealant layer may:
extend from one shoulder of the tire to the other through the crown region of the tire;
be positioned in at least one tire shoulder area region and extend into at least a portion of the adjoining tire sidewall portion of the tire, or
extend from sidewall-to-sidewall through the tire crown region.

The thickness of the sealant composition layer can vary greatly in an unvulcanized puncture sealant containing tire. Generally, the thickness of the sealant composition layer may range from 0.13 cm (0.05 inches) to 1.9 cm (0.75 inches). In passenger tires it is normally desired for the sealant composition layer to have a thickness of 0.32 cm (0.125 inches) whereas for truck tires, a thickness of 0.76 cm (0.3 inches) or greater might be desired.

After the unvulcanized pneumatic rubber tires of this invention are assembled they are vulcanized using a normal tire cure cycle. The tires of this invention can be cured over a wide temperature range. For example, passenger tires might be cured at a temperature ranging from 130°C to 170°C and for a period of time (e.g. from 10 to 45 minutes) depending upon the size of the tire and the degree of desired depolymerization of the butyl rubber as well as the thickness of the sealant layer itself, and sufficient to at least partially depolymerize said sealant precursor layer.

Accordingly, in one aspect of the invention, a self-sealing pneumatic rubber tire of this invention is envisioned wherein the tire has sidewalls, a supporting carcass, inextensible beads, an innerliner (air barrier layer), a sealant layer, and an outer circumferential tread (tread portion). The individual sidewalls extend radially inward from the axial outer edges of the tread portion to join the respective inextensible beads. The supporting carcass acts as a supporting structure for the tread portion and sidewalls. The sealant layer is disposed between said supporting carcass and said innerliner. The outer circumferential tread is adapted to be ground contacting when the tire is in use.

## Claims

1. A pneumatic rubber tire having a built-in puncture sealing layer comprising, based upon parts by weight per 100 parts by weight partially depolymerized polymer comprising butyl rubber or a composite of butyl rubber and at least one of cis 1,4-polyisoprene rubber or liquid cis 1,4-polyisoprene polymer or their mixture (phr):
(A) organoperoxide partially depolymerized polymer comprising:
(1) a first organoperoxide partially depolymerized rubber as an organoperoxide partially depolymerized butyl rubber, or
(2) a second organoperoxide partially depolymerized composite polymer network comprising:
(a) from 50 to 95 parts by weight organoperoxide partially depolymerized butyl rubber, and
(b) from 5 to 50 parts by weight at least one of organoperoxide partially depolymerized cis 1,4-polyisoprene
elastomer and organoperoxide partially depolymerized liquid polyisoprene polymer and their mixtures:
wherein said butyl rubber is a copolymer comprising isobutylene and isoprene comprising 0.5 to 5 percent, alternatively 0.5 to 1 percent, units derived from isoprene, and correspondingly from 95 to 99.5 weight percent, alternatively 99 to 99.5 weight percent, units derived from isobutylene,
wherein said cis 1,4-polyisoprene elastomer is a natural or synthetic cis 1,4-polyisoprene rubber having a cis 1,4-isomeric content of at least 95 percent,
wherein said liquid cis 1,4-polyisoprene polymer is a partially depolymerized natural or synthetic cis 1,4-polyisoprene rubber having a cis 1,4-isomeric content of at least 95 percent,
(B) from 25 to 100 phr particulate reinforcing filler comprising:
(1) from 25 to 100 phr of precipitated silica and from zero up to 5 phr of carbon black, so long as said sealant layer is of a non-black color or;
(2) from 5 to 50 phr of precipitated silica and from 10 to 50 phr of carbon black so long as the sealant layer is of a black color;
(3) from zero to 20 phr of additional filler comprised of clay preferably kaolin clay, calcium carbonate, corn cob granules, or exfoliated intercalated water swellable clay platelets or their mixtures;
(C) from zero to 6 phr, alternatively from 0.5 to 5 phr, of short organic fibers;
(D) optionally a colorant of other than a black color, wherein said colorant comprising at least one of organic pigments, inorganic pigments and dyes;
(E) from zero to 20 phr of rubber processing oil;
wherein said precipitated silica comprising:
(1) a pre-hydrophobated precipitated silica, or
(2) a combination of from 5 to 50 phr of pre-hydrophobated precipitated silica and from 5 to 50 phr of non pre-hydrophobated precipitated silica.

2. The tire of claim 1, wherein, for said sealant layer comprising said first organoperoxide partially depolymerized rubber, said pre-hydrophobated precipitated silica is provided by treatment of a precipitated silica with:
a non-silane containing compound comprising:
(a) dithiodipropoinic acid,
(b) trithiodipropionic acid,
(c) tetrathiodipropionic acid,
(d) 2-hydroxyethyl methacrylate,
(e) thioglycerol,
(f) benzothiazyl disulfide, or
(g) a combination of at least one of said non-silane containing compounds and an alkoxysilane containing compound comprised of at least one of an organoalkoxysilane compound and organomercaptoalkoxysilane compound; and/or
wherein for said second organoperoxide partially depolymerized composite, said pre-hydrophobated precipitated silica is provided by treatment of precipitated silica prior to addition of said organoperoxide either in situ within the rubber composition or by pre-treatment of said silica prior to its addition to the rubber composition, preferably butyl rubber in combination with said cis 1,4-polyisoprene rubber and/or liquid cis 1,4-polyisoprene rubber, to inhibit adsorption or absorption of said organoperoxide on the surface of said silica.

3. The tire of claim 1 or 2, wherein said built-in puncture sealing layer comprises, based upon parts by weight per 100 parts by weight partially depolymerized butyl rubber (phr), an organoperoxide partially depolymerized butyl rubber;
wherein said particulate reinforcing filler comprises:
(A) from 5 to 50 phr, alternatively from 25 to 100 phr, of precipitated silica and from 10 to 50 phr, alternatively 0 to 5 phr, of carbon black so long as the sealant layer is of a black color;
(B) from zero to 20 phr of additional filler comprised of clay preferably kaolin clay, calcium carbonate, com cob granules, or exfoliated intercalated water swellable clay platelets or their mixtures;
wherein said precipitated silica is comprises:
(1) a pre-hydrophobated precipitated silica, or
(2) a combination of from 5 to 50 phr of pre-hydrophobated precipitated silica and from 5 to 50 phr of non pre-hydrophobated precipitated silica;
and wherein said pre-hydrophobated precipitated silica is pre-hydrophobated by treatment of a precipitated silica with:
(3) a non-silane containing compound comprising:
(a) dithiodipropoinic acid,
(b) trithiodipropionic acid,
(c) tetrathiodipropionic acid,
(d) 2-hydroxyethyl methacrylate,
(e) thioglycerol,
(f) benzothiazyl disulfide, or
(4) a combination of at least one of said non-silane containing compounds and an alkoxysilane containing compound comprising at least one of an organoalkoxysilane compound and organomercaptoalkoxysilane compound.

4. The tire of at least one of the previous claims, wherein said built-in puncture sealing layer comprises an organoperoxide partially depolymerized composite polymer comprising:
(A) from 50 to 95 parts by weight organoperoxide partially depolymerized butyl rubber, and
(B) from 5 to 50 parts by weight at least one of organoperoxide partially depolymerized cis 1,4-polyisoprene elastomer and organoperoxide partially depolymerized liquid polyisoprene polymer and their mixtures:
wherein said particulate reinforcing filler comprises:
(C) from 5 to 50 phr, alternatively from 25 to 100 phr, of precipitated silica and from 10 to 50 phr, alternatively from 0 to 5 phr, of carbon black so long as the sealant layer is of a black color;
(D) from zero to 20 phr of additional filler comprising clay, preferably kaolin clay, calcium carbonate, com cob granules, or exfoliated intercalated water swellable clay platelets or their mixtures;
wherein said precipitated silica comprises:
(E) a pre-hydrophobated precipitated silica, or
(F) a combination of from 5 to 50 phr of pre-hydrophobated precipitated silica and from 5 to 50 phr of non pre-hydrophobated precipitated silica, or
(G) a combination of from 5 to 30 phr of pre-hydrophobated precipitated silica and from 5 to 30 phr of non pre-hydrophobated precipitated silica;
wherein said pre-hydrophobated precipitated silica is pre-hydrophobated by treatment of a precipitated silica with:
(H) a non-silane containing compound comprising:
(1) dithiodipropoinic acid,
(2) trithiodipropionic acid,
(3) tetrathiodipropionic acid,
(4) 2-hydroxyethyl methacrylate,
(5) thioglycerol,
(6) benzothiazyl disulfide, or
(7) a combination of at least one of said non-silane containing compounds and an alkoxysilane containing compound comprising at least one of an organoalkoxysilane compound and organomercaptoalkoxysilane compound, or
(I) a bis(3-trialkoxysilylalkyl) polysulfide having an average of from 2 to 4 connecting sulfur atoms in its polysulfidic bridge.

5. The tire of any of the preceding claims, wherein said built-in sealant layer is positioned between a tire innerliner rubber layer and tire carcass or between two tire innerliner rubber layers.

6. The tire of any of the preceding claims 1 through 5, wherein said built-in sealant layer extends from sidewall-to-sidewall portions of the tire through the tire crown region.

7. The tire of any of the preceding claims 1 through 6, wherein said tire innerliner layer(s) comprises a halobutyl based rubber composition.

8. The tire of any of the preceding claims 1 through 7, wherein said built-in sealant layer contains from 5 to15 phr of said additional filler comprising clay, calcium carbonate, com cob granules, or exfoliated intercalated water swellable clay platelets or their mixtures.

9. The tire of any of the preceding claims 1 through 8, wherein said organoperoxide comprises at least one of n-butyl 4,4-di-(tert-butylperoxy) valerate, 2,5-bis(t-butyl peroxy)-2,5-dimethyl hexane; 1,1-di-t-butyl peroxi-3,3,5-trimethyl cyclohexane; 2,5-dimethyl-2,5-di(t-butyl peroxy) hexyne-3; p-chlorobenzyl peroxide; 2,4-dichlorobenzyl peroxide; 2,2-bis-(t-butyl peroxi)-butane; di-t-butyl peroxide; benzyl peroxide; 2,5-bis(t-butyl peroxy)-2,5-dimethyl hexane, dicumyl peroxide; and 2,5-dimethyl-2,5-di(t-butyl peroxy) hexane.

10. The tire of any of the preceding claims, wherein said organoalkoxysilane comprises at least one of trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

## Patentansprüche

1. Gummiluftreifen mit eingebauter Durchstich-Abdichtschicht, umfassend, bezogen auf Gewichtsteile pro 100 Gew.-Teile teilweise depolymerisiertes Polymer, umfassend Butylkautschuk oder ein Komposit von Butylkautschuk und mindestens einem aus cis-1,4-Polyisopren-Kautschuk oder flüssigem cis-1,4-Polyisopren-Polymer oder deren Mischung (ThK):
(A) mit Organoperoxid teilweise depolymerisiertes Polymer umfassend:
(1) einen ersten mit Organoperoxid teilweise depolymerisierten Kautschuk als einen mit Organoperoxid teilweise depolymerisierten Butylkautschuk oder
(2) ein zweites mit Organoperoxid teilweise depolymerisiertes Komposit-Polymernetzwerk, umfassend:
(a) 50 bis 95 Gew.-Teile mit Organoperoxid teilweise depolymerisierten Butylkautschuk und
(b) 5 bis 50 Gew.-Teile mindestens eines aus mit Organoperoxid teilweise depolymerisiertem cis-1,4-Polyisopren-Elastomer und mit Organoperoxid teilweise depolymerisiertem flüssigem Polyisopren-Polymer und deren Mischungen:
wobei der Butylkautschuk ein Copolymer umfassend Isobutylen und Isopren umfassend 0,5 bis 5%, alternativ 0,5 bis 1 %, Einheiten abgeleitet aus Isopren und entsprechend 95 bis 99,5 Gew.-%, alternativ 99 bis 99,5 Gew.-%, Einheiten abgeleitet von Isobutylen ist,
wobei das cis-1,4-Polyisopren-Elastomer ein natürlicher oder synthetischer cis-1,4-Polyisopren-Kautschuk mit einem cis-1,4-lsomergehalt von mindestens 95% ist,
wobei das flüssige cis-1,4-Polyisopren-Polymer ein teilweise depolymerisierter natürlicher oder synthetischer cis-1,4-Polyisopren-Kautschuk mit einem cis-1,4-Isomergehalt von mindestens 95% ist,
(B) 25 bis 100 ThK teilchenförmigen Verstärkungsfüllstoff umfassend:
(1) 25 bis 100 ThK gefällte Kieselsäure und 0 bis zu 5 ThK Ruß, sofern die Abdichtschicht eine nicht-schwarze Farbe aufweist, oder
(2) 5 bis 50 ThK gefällte Kieselsäure und 10 bis 50 ThK Ruß, sofern die Abdichtschicht eine schwarze Farbe aufweist;
(3) 0 bis 20 ThK zusätzlichen Füllstoff, umfassend Ton, bevorzugt Kaolinton, Calciumcarbonat, Maiskolbengranulat oder exfolierte, interkalierte, mit Wasser quellbare Tonplättchen oder deren Mischungen;
(C) 0 bis 6 ThK, alternativ 0,5 bis 5 ThK, organische Kurzfasern;
(D) gegebenenfalls ein von einer schwarzen Farbe verschiedenes farbgebendes Mittel, wobei das farbgebende Mittel mindestens eines aus organischen Pigmenten, anorganischen Pigmenten und Farbstoffen umfasst;
(E) 0 bis 20 ThK Kautschukverarbeitungsöl;
wobei die gefällte Kieselsäure umfasst:
(1) eine vorhydrophobierte gefällte Kieselsäure oder
(2) eine Kombination von 5 bis 50 ThK vorhydrophobierter gefällter Kieselsäure und 5 bis 50 ThK nicht vorhydrophobierter gefällter Kieselsäure.

2. Reifen nach Anspruch 1, wobei für die Abdichtschicht, die den ersten mit Organoperoxid teilweise depolymerisierten Kautschuk umfasst, die vorhydrophobierte gefällte Kieselsäure bereitgestellt wird durch Behandlung einer gefällten Kieselsäure mit:
einer Nicht-Silan enthaltenden Verbindung, umfassend:
(a) Dithiodipropionsäure,
(b) Trithiodipropionsäure,
(c) Tetrathiodipropionsäure,
(d) 2-Hydroxyethylmethacrylat,
(e) Thioglycerin,
(f) Benzothiazyldisulfid oder
(g) eine Kombination von mindestens einer der genannten Nicht-Silan enthaltenden Verbindungen und einer Alkoxysilan enthaltenden Verbindung umfassend mindestens eine aus einer Organoalkoxysilan-Verbindung und einer Organomercaptoalkoxysilan-Verbindung; und/oder
wobei für das zweite mit Organoperoxid teilweise depolymerisierte Komposit die vorhydrophobierte gefällte Kieselsäure bereitgestellt wird durch Behandlung von gefällter Kieselsäure vor der Zugabe des Organoperoxids entweder in situ in der Kautschukzusammensetzung oder durch Vorbehandlung der Kieselsäure vor ihrer Zugabe zu der Kautschukzusammensetzung, bevorzugt Butylkautschuk in Kombination mit dem cis-1,4-PolyisoprenKautschuk und/oder dem flüssigen cis-1,4-Polyisopren-Kautschuk, um die Adsorption oder Absorption des Organoperoxids auf der Oberfläche der Kieselsäure zu verhindern.

3. Reifen nach Anspruch 1 oder 2, wobei die eingebaute Durchstich-Abdichtschicht, bezogen auf Gewichtsteile pro 100 Gew.-Teilen teilweise depolymerisierten Butylkautschuk (ThK) einen mit Organoperoxid teilweise depolymerisierten Butylkautschuk umfasst,
wobei der teilchenförmige Verstärkungsfüllstoff umfasst:
(A) 5 bis 50 ThK, alternativ 25 bis 100 ThK, gefällte Kieselsäure und 10 bis 50 ThK, alternativ 0 bis 5 ThK, Ruß, sofern die Abdichtschicht von schwarzer Farbe ist;
(B) 0 bis 20 ThK zusätzlichen Füllstoff umfassend Ton, bevorzugt Kaolinton, Calciumcarbonat, Maiskolbengranulat oder exfolierte, interkalierte, mit Wasser quellbare Tonplättchen oder deren Mischungen;
wobei die gefällte Kieselsäure umfasst:
(1) eine vorhydrophobierte gefällte Kieselsäure oder
(2) eine Kombination von 5 bis 50 ThK vorhydrophobierter gefällter Kieselsäure und 5 bis 50 ThK nicht vorhydrophobierter gefällter Kieselsäure;
und wobei die vorhydrophobierte gefällte Kieselsäure vorhydrophobiert ist durch Behandlung einer gefällten Kieselsäure mit:
(3) einer Nicht-Silan enthaltenden Verbindung umfassend:
(a) Dithiodipropionsäure,
(b) Trithiodipropionsäure,
(c) Tetrathiodipropionsäure,
(d) 2-Hydroxyethylmethacrylat,
(e) Thioglycerin,
(f) Benzothiazyldisulfid oder
(4) einer Kombination von mindestens einer aus der genannten Nicht-Silan enthaltenden Verbindungen und einer Alkoxysilan enthaltenden Verbindung umfassend mindestens eine aus einer Organoalkoxysilan-Verbindung und einer Organomercaptoalkoxysilan-Verbindung.

4. Reifen nach mindestens einem der vorhergehenden Ansprüche, wobei die eingebaute Durchstich-Abdichtschicht ein mit Organoperoxid teilweise depolymerisiertes Kompositpolymer umfasst, umfassend:
(A) 50 bis 95 Gew.-Teile mit Organoperoxid teilweise depolymerisierten Butylkautschuk und
(B) 5 bis 50 Gew.-Teile mindestens eines von mit Organoperoxid teilweise depolymerisiertem cis-1,4-Polyisopren-Elastomer und mit Organoperoxid teilweise depolymerisiertem flüssigem Polyisopren-Polymer und deren Mischungen;
wobei der teilchenförmige Verstärkungsfüllstoff umfasst:
(C) 5 bis 50 ThK, alternativ 25 bis 100 ThK, gefällte Kieselsäure und 10 bis 50 ThK, alternativ 0 bis 5 ThK, Ruß, sofern die Abdichtschicht von schwarzer Farbe ist;
(D) 0 bis 20 ThK zusätzlichen Füllstoff umfassend Ton, bevorzugt Kaolinton, Calciumcarbonat, Maiskolbengranulat oder exfolierte, interkalierte, mit Wasser quellbare Tonplättchen oder deren Mischungen;
wobei die gefällte Kieselsäure umfasst:
(E) eine vorhydrophobierte gefällte Kieselsäure oder
(F) eine Kombination von 5 bis 50 ThK vorhydrophobierter gefällter Kieselsäure und 5 bis 50 ThK nicht vorhydrophobierter gefällter Kieselsäure, oder
(G) eine Kombination von 5 bis 30 ThK vorhydrophobierter gefällter Kieselsäure und 5 bis 30 ThK nicht vorhydrophobierter gefällter Kieselsäure;
wobei die vorhydrophobierte gefällte Kieselsäure vorhydrophobiert ist durch Behandlung einer gefällten Kieselsäure mit:
(H) einer Nicht-Silan enthaltenden Verbindung umfassend:
(1) Dithiodipropionsäure,
(2) Trithiodipropionsäure,
(3) Tetrathiodipropionsäure,
(4) 2-Hydroxyethylmethacrylat,
(5) Thioglycerin,
(6) Benzothiazyldisulfid oder
(7) eine Kombination von mindestens einer von den genannten Nicht-Silan enthaltenden Verbindungen und einer Alkoxysilan enthaltenden Verbindung umfassend mindestens eine von einer Organoalkoxysilan-Verbindung und einer Organomercaptoalkoxysilan-Verbindung oder
(I) ein Bis(3-trialkoxysilylalkyl)polysulfid mit einem Durchschnitt von 2 bis 4 verbindenden Schwefelatomen in der Polysulfidbrücke.

5. Reifen nach irgendeinem der vorhergehenden Ansprüche, wobei die eingebaute Abdichtschicht zwischen einer Reifeninnerliner-Gummischicht und einer Reifenkarkasse oder zwischen zwei Reifeninnerliner-Gummischichten angeordnet ist.

6. Reifen nach irgendeinem der vorhergehenden Ansprüche 1 bis 5, wobei die eingebaute Abdichtschicht sich von Seitenwand-zu-Seitenwand-Bereichen des Reifens durch den Reifenprotektorbereich erstreckt.

7. Reifen nach irgendeinem der vorhergehenden Ansprüche 1 bis 6, wobei der oder die Reifeninnerlinerschichten eine Kautschukzusammensetzung auf Halogenbutylbasis umfassen.

8. Reifen nach irgendeinem der vorhergehenden Ansprüche 1 bis 7, wobei die eingebaute Abdichtschicht 5 bis 15 ThK des zusätzlichen Füllstoffs umfassend Ton, Calciumcarbonat, Maiskolbengranulat oder exfolierte, interkalierte, mit Wasser quellbare Tonplättchen oder deren Mischungen enthält.

9. Reifen nach irgendeinem der vorhergehenden Ansprüche 1 bis 8, wobei das Organoperoxid mindestens eines von n-Butyl-4,4-di(tert.-butylperoxy)valerat, 2,5-Bis(tert.-butylperoxy)-2,5-dimethylhexan; 1,1-Di-tert.-butylperoxy-3,3,5-trimethylcyclohexan; 2,5-Dimethyl-2,5-di(tert.-butylperoxy)hexin-3; p-Chlorbenzylperoxid; 2,4-Dichlorbenzylperoxid; 2,2-Bis(tert.-butylperoxy)butan; Di-tert.-butylperoxid; Benzylperoxid; 2,5-Bis(tert.-butylperoxy)-2,5-dimethylhexan, Dicumylperoxid; und 2,5-Dimethyl-2,5-di(tert.-butylperoxy)hexan umfasst.

10. Reifen nach irgendeinem der vorhergehenden Ansprüche, wobei das Organoalkoxysilan mindestens eines von Trimethoxymethylsilan, Dimethoxydimethylsilan, Methoxytrimethylsilan, Trimethoxypropylsilan, Trimethoxyoctylsilan, Trimethoxyhexadecylsilan, Dimethoxydipropylsilan, Triethoxymethylsilan, Triethoxypropylsilan, Triethoxyoctylsilan und Diethoxydimethylsilan umfasst.

## Revendications

1. Bandage pneumatique en caoutchouc possédant une couche intégrée s'opposant aux crevaisons, comprenant, en se basant sur des parties en poids par 100 parties en poids d'un polymère partiellement dépolymérisé comprenant du caoutchouc butyle ou un composite de caoutchouc butyle et d'au moins un membre choisi parmi le groupe comprenant du caoutchouc de cis 1,4-polyisoprène et un polymère liquide de cis 1,4-polyisoprène ou de leurs mélanges (phr) :
(A) un polymère partiellement dépolymérisé contenant un ou plusieurs organoperoxydes comprenant :
(1) un premier caoutchouc partiellement dépolymérisé contenant un ou plusieurs organoperoxydes, à titre de caoutchouc butyle partiellement dépolymérisé contenant un ou plusieurs organoperoxydes, ou
(2) un deuxième réseau de polymère composite d'organoperoxyde partiellement dépolymérisé, comprenant :
(a) à concurrence de 50 à 95 parties en poids, du caoutchouc butyle partiellement dépolymérisé contenant un ou plusieurs organoperoxydes ; et
(b) à concurrence de 5 à 50 parties en poids, au moins un membre choisi parmi le groupe comprenant un élastomère de cis 1,4-polyisoprène partiellement dépolymérisé contenant un ou plusieurs organoperoxydes et un polymère de polyisoprène liquide partiellement dépolymérisé contenant un ou plusieurs organoperoxydes et leurs mélanges ;
ledit caoutchouc butyle représentant un copolymère comprenant de l'isobutylène et de l'isoprène comprenant à concurrence de 0,5 à 5 %, en variante à concurrence de 0,5 à 1 %, des unités qui dérivent de l'isoprène et, de manière correspondante, à concurrence de 95 à 99,5 % en poids, en variante à concurrence de 99 à 99,5 % en poids, des unités qui dérivent de l'isobutylène ;
ledit élastomère de cis 1,4-polyisoprène représente un caoutchouc de cis 1,4-polyisoprène naturel ou synthétique possédant une teneur cis 1,4-isomère à concurrence d'au moins 95 % ;
ledit polymère liquide de cis 1,4-polyisoprène représente un caoutchouc naturel ou synthétique de cis 1,4-polyisoprène partiellement dépolymérisé possédant une teneur cis 1,4-isomère à concurrence d'au moins 95 % ;
(B) à concurrence de 25 à 100 phr, une matière de charge particulaire pour le renforcement, comprenant :
(1) à concurrence de 25 à 100 phr, de la silice précipitée et, à concurrence de zéro jusqu'à 5 phr, du noir de carbone, pour autant que ladite couche s'opposant aux crevaisons possède une couleur non noire ; ou
(2) à concurrence de 5 à 50 phr, de la silice précipitée et, à concurrence de 10 à 50 phr, du noir de carbone, pour autant que ladite couche s'opposant aux crevaisons possède une couleur noire ;
(3) à concurrence de zéro à 20 phr, une matière de charge supplémentaire comprenant de l'argile, de préférence de l'argile de kaolin, du carbonate de calcium, des granulés de rafles de maïs ou encore des lamelles d'argile gonflables en présence d'eau intercalaires exfoliées ou encore leurs mélanges ;
(C) à concurrence de zéro à 6 phr, en variante de 0,5 à 5 phr, de courtes fibres organiques ;
(D) le cas échéant, une matière colorante ou une couleur autre que la couleur noire, ladite matière colorante comprenant au moins un membre choisi parmi le groupe constitué par des pigments organiques, des pigments inorganiques et des colorants ;
(E) à concurrence de zéro à 20 phr, de l'huile plastifiante pour caoutchouc ;
ladite silice précipitée comprenant :
(1) une silice précipitée rendue préalablement hydrophobe ; ou
(2) une combinaison, à concurrence de 5 à 50 phr, d'une silice précipitée rendue préalablement hydrophobe et à concurrence de 5 à 50 phr, d'une silice précipitée non rendue préalablement hydrophobe.

2. Bandage pneumatique selon la revendication 1, dans lequel, pour ladite couche s'opposant aux crevaisons, comprenant ledit premier caoutchouc d'organoperoxyde partiellement dépolymérisé, ladite silice précipitée rendue préalablement hydrophobe et obtenue à l'aide d'un traitement d'une silice précipitée avec :
un composé exempt de silane, comprenant :
(a) de l'acide dithiodipropionique ;
(b) de l'acide trithiodipropionique ;
(c) de l'acide tétrathiodipropionique ;
(d) du méthacrylate de 2-hydroxyéthyle ;
(e) du thioglycérol ;
(f) du disulfure de benzothiazyle ; ou
(g) une combinaison d'au moins un membre choisi parmi le groupe comprenant ledit composé exempt de groupe silane et un composé contenant un alcoxy silane, comprenant au moins un composé d'organoalcoxysilane et un composé d'organomercaptoalcoxysilane ; et/ou
dans lequel, pour ledit deuxième composite d'organoperoxyde partiellement dépolymérisé, ladite silice précipitée rendue préalablement hydrophobe est obtenue par traitement d'une silice précipitée avant l'addition dudit organoperoxyde, soit in situ au sein de la composition de caoutchouc, soit par prétraitement de ladite silice avant son addition à la composition du caoutchouc, de préférence du caoutchouc butyle en combinaison avec ledit caoutchouc de cis 1,4-polyisoprène et/ou ledit caoutchouc liquide de cis 1,4-polyisoprène, afin d'inhiber l'adsorption ou l'absorption dudit organoperoxyde à la surface de ladite silice.

3. Bandage pneumatique selon la revendication 1 ou 2, dans lequel ladite couche intégrée s'opposant aux crevaisons comprend, basé sur des parties en poids par 100 parties en poids du caoutchouc butyle partiellement dépolymérisé (phr), un caoutchouc butyle ;
ladite matière particulaire pour le renforcement comprenant :
(A) à concurrence de 5 à 50 phr, en variante de 25 à 100 phr, de la silice précipitée et, à concurrence de 10 à 50 phr, en variante de 0 à 5 phr, du noir de carbone, pour autant que ladite couche s'opposant aux crevaisons possède une couleur noire ;
(B) à concurrence de zéro à 20 phr, une matière de charge supplémentaire comprenant de l'argile, de préférence de l'argile de kaolin, du carbonate de calcium, des granulés de rafles de maïs ou encore des lamelles d'argile gonflables en présence d'eau intercalaires exfoliées ou encore leurs mélanges ;
ladite silice précipitée comprenant :
(1) une silice précipitée rendue préalablement hydrophobe ; ou
(2) une combinaison, à concurrence de 5 à 50 phr, d'une silice précipitée rendue préalablement hydrophobe et à concurrence de 5 à 50 phr, d'une silice précipitée non rendue préalablement hydrophobe ;
et ladite silice précipitée est rendue préalablement hydrophobe à l'aide d'un traitement d'une silice précipitée avec :
(3) un composé exempt de silane, comprenant :
(a) de l'acide dithiodipropionique ;
(b) de l'acide trithiodipropionique ;
(c) de l'acide tétrathiodipropionique ;
(d) du méthacrylate de 2-hydroxyéthyle ;
(e) du thioglycérol ;
(f) du disulfure de benzothiazyle ; ou
(4) une combinaison d'au moins un membre choisi parmi le groupe comprenant ledit composé exempt de groupe silane et un composé contenant un alcoxy silanes, comprenant au moins un composé d'organoalcoxysilane et un composé d'organomercaptoalcoxysilane.

4. Bandage pneumatique selon au moins une des revendications précédentes, dans lequel ladite couche intégrée s'opposant aux crevaisons comprend un polymère composite partiellement dépolymérisé contenant un ou plusieurs organoperoxydes, comprenant :
(A) à concurrence de 50 à 95 parties en poids, un caoutchouc butyle partiellement dépolymérisé contenant un ou plusieurs groupes organoperoxydes ; et
(B) à concurrence de 5 à 50 parties en poids, au moins un membre choisi parmi le groupe comprenant un élastomère de cis 1,4-polyisoprène partiellement dépolymérisé contenant un ou plusieurs organoperoxydes et un polymère de polyisoprène liquide partiellement dépolymérisé contenant un ou plusieurs organoperoxydes, ainsi que leurs mélanges ;
ladite matière de charge particulaire pour le renforcement, comprenant :
(C) à concurrence de 5 à 50 phr, en variante de 25 à 100 phr, de la silice précipitée et, à concurrence de 10 à 50 phr, en variante de 0 à 5 phr, du noir de carbone, pour autant que ladite couche s'opposant aux crevaisons possède une couleur noire ;
(D) à concurrence de zéro à 20 phr, une matière de charge supplémentaire comprenant de l'argile, de préférence de l'argile de kaolin, du carbonate de calcium, des granulés de rafles de maïs ou encore des lamelles d'argile gonflables en présence d'eau intercalaires exfoliées ou encore leurs mélanges ;
ladite silice précipitée comprenant :
(E) une silice précipitée rendue préalablement hydrophobe ; ou
(F) une combinaison, à concurrence de 5 à 50 phr, d'une silice précipitée rendue préalablement hydrophobe et à concurrence de 5 à 50 phr, d'une silice précipitée non rendue préalablement hydrophobe ; ou
(G) une combinaison, à concurrence de 5 à 30 phr, d'une silice précipitée rendue préalablement hydrophobe et à concurrence de 5 à 30 phr, d'une silice précipitée non rendue préalablement hydrophobe ;
ladite silice précipitée étant rendue préalablement hydrophobe à l'aide d'un traitement d'une silice précipitée avec :
(H) un composé exempt de silane, comprenant :
(1) de l'acide dithiodipropionique ;
(2) de l'acide trithiodipropionique ;
(3) de l'acide tétrathiodipropionique ;
(4) du méthacrylate de 2-hydroxyéthyle ;
(5) du thioglycérol ;
(6) du disulfure de benzothiazyle ; ou
(7) une combinaison d'au moins un membre choisi parmi le groupe comprenant ledit composé exempt de groupe silane et un composé contenant un alcoxy silanes, comprenant au moins un composé d'organoalcoxysilane et un composé d'organomercaptoalcoxysilane ; ou
(I) un bis(3-trialcoxysilylalkyl) polysulfure possédant en moyenne de 2 à 4 atomes de soufre de liaison dans son pont polysulfure.

5. Bandage pneumatique selon l'une quelconque des revendications précédentes, dans lequel ladite couche intégrée s'opposant aux crevaisons vient se disposer entre une couche de caoutchouc de calandrage intérieur du bandage pneumatique et la carcasse du bandage pneumatique ou bien entre deux couches de caoutchouc du calandrage intérieur du bandage pneumatique.

6. Bandage pneumatique selon l'une quelconque des revendications précédentes 1 à 5, dans lequel ladite couche intégrée s'opposant aux crevaisons s'étend d'une portion de flanc à l'autre dans le bandage pneumatique, en passant par la zone de sommet du bandage pneumatique.

7. Bandage pneumatique selon l'une quelconque des revendications 1 à 6, dans lequel ladite/lesdites couches de calandrage intérieur du bandage pneumatique comprennent une composition de caoutchouc à base de caoutchouc halogénobutyle.

8. Bandage pneumatique selon l'une quelconque des revendications 1 à 7, dans lequel ladite couche intégrée s'opposant aux crevaisons contient, à concurrence de 5 à 15 phr, une matière de charge supplémentaire comprenant de l'argile, de préférence de l'argile de kaolin, du carbonate de calcium, des granulés de rafles de maïs ou encore des lamelles d'argile gonflables en présence d'eau intercalaires exfoliées ou encore leurs mélanges.

9. Bandage pneumatique selon l'une quelconque des revendications 1 à 8, dans lequel ledit organoperoxyde comprend au moins un membre choisi parmi le groupe comprenant du 4,4-di-(tert-butylperoxy) valérate de n-butyle, du 2,5-bis(tert-butylperoxy)-2,5-diméthyl hexane, dû 1,1-di-tert-butylperoxy-3,3,5-triméthyl cyclohexane, du 2,5-diméthyl-2,5-di(tert-butylperoxy) hexyne-3, du peroxyde de p-chlorobenzyle, du peroxyde de 2,4-dichlorobenzyle, des 2,2-bis(tert-butylperoxy)-butane, du peroxyde de di-tert-butyle, du peroxyde de benzyle, du 2,5-bis(tert-butylperoxy)-2,5-diméthyl hexane, du peroxyde de dicumyle et du 2,5-diméthyl-2,5-di(tert-butylperoxy) hexane.

10. Bandage pneumatique selon l'une quelconque des revendications précédentes, dans lequel ledit organoalcoxysilane comprend au moins un membre choisi parmi le groupe comprenant du triméthoxy méthyl silane, du diméthoxy diméthyl silane, du méthoxy triméthyl silane, du triméthoxy propyl silane, du triméthoxy octyl silane, du triméthoxy hexadécyl silane, du diméthoxy dipropyl silane, du triéthoxy méthyl silane, du triéthoxy propyl silane, du triéthoxy octyl silane et du diéthoxy diméthyl silane.
